## Europäisches Patentamt

## European Patent Office

## Office européen des brevets

(19)

(11) Veröffentlichungsnummer: **0 083 004**
**B1**

(12) **EUROPÄISCHE PATENTSCHRIFT**

(45) Veröffentlichungstag der Patentschrift:
01.04.87

(51) Int. Cl.⁴: **C 08 L 33/26, C 04 B 26/10**

(21) Anmeldenummer: **82111460.0**

(22) Anmeldetag: **10.12.82**

(54) **Wässrige Zubereitung und ihre Verwendung bei der Herstellung keramischer Massen.**

(30) Priorität: **24.12.81 DE 3151374**

(43) Veröffentlichungstag der Anmeldung:
**06.07.83 Patentblatt 83/27**

(45) Bekanntmachung des Hinweises auf die Patenterteilung:
**01.04.87 Patentblatt 87/14**

(84) Benannte Vertragsstaaten:
**AT BE DE FR GB IT NL**

(56) Entgegenhaltungen:
**EP - A - 0 083 003**
**FR - A - 2 174 960**
**FR - A - 2 332 301**
**US - A - 3 390 212**
**US - E - 28 474**

(73) Patentinhaber: **BAYER AG, Konzernverwaltung RP Patentabteilung, D-5090 Leverkusen 1 Bayerwerk (DE)**

(72) Erfinder: **Drinkuth, Franz, Gruener Weg 6, D-5068 Odenthal 2 (DE)**
Erfinder: **von Bonin, Wulf, Dr., Mendelssohnstrasse 30, D-5090 Leverkusen 1 (DE)**
Erfinder: **Schäpel, Dietmar, Dr., Johanniterstrasse 15, D-5000 Koeln 80 (DE)**
Erfinder: **Lorenz, Artur, Raiffeisenstrasse 2, D-7750 Konstanz-Litzelstetten (DE)**

## Beschreibung

Ziegel für die Bauindustrie werden im allgemeinen aus Ton, teilweise unter Mitverwendung von Lehm, Sand, gemahlenem und gebranntem Ton und/oder anderen mineralischen Stoffen hergestellt. Hierzu werden die Komponenten in dem Aufbereitungsprozess homogenisiert, indem sie unter Hinzufügen von Wasser intensiv gemischt werden. Eine gute Homogenisierung der Tonmasse ist zur Erzielung hoher Festigkeitswerte der Ziegel notwendig. Um die erhaltene feuchte Tonmasse verpressen zu können, wird eine von der Art des Tons und der Konstruktion der Presse abhängige spezielle Materialsteife eingestellt, wie es z.B. von Leusden, Ziegeleitechnisches Jahrbuch, 1974, Seiten 172–226, Bau-Verlag, Wiesbaden beschrieben ist. Die aufbereitete Masse wird in der Presse zu Formlingen gepresst, die nach anschliessendem Trocknungs- und Brennprozess den Ziegel ergeben.

Weiterhin sind aus der FR-A-2 174 960 Zubereitungen bekannt, die wasserlösliche bzw. quellbare Vinylpolymere und wasserlösliche Celluloseether enthalten. Diese Zubereitung kann z.B. bei der Herstellung poröser, keramischer Träger verwendet werden. Darüber hinaus ist aus der US-A-3 790 212 bekannt, bei der Herstellung poröser, keramischer Körper Öl-Wasser-Emulsion vorteilhaft zu verwenden.

Tone im Sinne der vorliegenden Erfindung sind solche Materialien, wie sie in der Baustoffe und Baumaterialien sowie in der Keramik herstellenden Industrie üblicherweise verwendet werden, d.h. die sehr feinkörnige Lockergesteine darstellen, die durch Verwitterung feldspatreicher Gesteine entstanden als typische Vertreter der bindigen Böden anzusehen sind. Die bindigen Eigenschaften zeigen sich in einem Aneinanderhaften der einzelnen Teilchen, so dass eine zusammenhängende Masse entsteht, die in feuchtem Zustand plastisch ist und beim Austrocknen fest und leicht rissig wird.

Kompakte Ziegel besitzen ein hohes Gewicht und eine hohe Wärmeleitfähigkeit. Es sind verschiedene Verfahren bekannt, um Ziegel mit geringerem Gewicht und verringerter Wärmeleitfähigkeit zu erhalten. So werden z.B. Hochloch- und Gitterziegel sowie über die gesamte Masse porosierte Ziegelarten hergestellt. Für die Ziegelporosierung werden bekannterweise organische Partikel in Form von Polystyrolperlen, Sägemehlen u.a. Feststoffen, die im Brennprozess ausbrennen und nur wenig bzw. keine Asche hinterlassen, verwendet.

Obwohl die bekannten Porosierungsverfahren die Porosität des Ziegelscherbens günstig beeinflussen, sind sie teilweise mit erheblichen Mängeln behaftet. Durch die Porosierung des Scherbens sinkt die Ziegelfestigkeit unverhältnismässig stark ab.

Es zeigt sich auch, dass die Verwendung trockener Porosierungsstoffe die Materialaufbereitung erschwert.

Nachteilig ist bei Verwendung von z.B. Polystyrolpartikeln der hohe Verlust bei der Aufbereitung. Dieser Nachteil kann durch die im Herstellprozess möglichst späte Zugabe der Polystyrolperlen, z.B. in der Presse, behoben werden. Dies führt aber im allgemeinen zu einer ungenügenden Vermischung des Porosierungsstoffes mit der Tonmasse. Ein weiterer Mangel dieses Verfahrens ist die elastische Rückverformung der Polystyrolperlen nach Austritt des Formlings aus dem Pressenmundstück.

Die Nachteile von Porosierungsverfahren bei Verwendung von sonstigen hydrophilen Feststoffen, wie z.B. Sägemehlen und Sägespänen, sind ebenfalls durch den Porosierungsstoff bedingt. Es ist bekannt, dass die Wasseraufnahme bei Ton eine Quellung hervorruft. Im Umkehrfall schwindet Ton bei der Trocknung, bis sich eine Feuchte von ca. 5 bis 10% eingestellt hat und dann fast nicht mehr. Holz zeigt im Prinzip gleiches Verhalten. Hier beginnt das wesentliche Schwinden erst bei Trocknung unter 10% Feuchte, so dass die Holzpartikel das Schwinden des Tons behindern und dessen Gefüge durch entstehende Mikrorisse stören. Am deutlichsten zeigt sich dieser Mangel, wenn Holzpartikel und Ton nach dem Mischen der Masse verpresst werden und die Holzpartikel noch Wasser aufnehmen können. In diesem Fall entziehen sie dem Ton des Formlings Wasser und quellen nach, der Ton dagegen schwindet, so dass aufgrund des gegenläufigen Verhaltens beider Komponenten die Rissbildung verstärkt auftritt. Diese Tatsache führt zu einer erheblichen Minderung der Ziegelfestigkeit und erlaubt daher keine weitere Gewichtsreduzierung bei grossen Ziegelformaten.

Es ist auch schon vorgeschlagen worden, Altöl, Schweröl oder ähnliche ausbrennbare flüssige organische Substanzen als Porosierungsmittel im Aufbereitungsprozess der Ziegelrohmasse zuzusetzen. Dieser Vorschlag hat sich bisher aufgrund der damit erzielbaren geringen Porosierung und der Schwierigkeiten, eine gleichmässige, homogene Einarbeitung in die Tonmassen zu erzielen, ohne unzumutbare Abwandlungen der Aufbereitungsprozesse und -maschinen vornehmen zu müssen, nicht durchgesetzt.

Es ist weiterhin bekannt, dass wässrige Lösungen von Polymeren wie Polyacrylamid oder Cellulosederivaten oder auch Polymerdispersionen bei der Verarbeitung von keramischen Massen als Plastifizierhilfsmittel eine gewisse Wirkung entfalten und gegebenenfalls zu Scherben mit schwach reduziertem Raumgewicht führen.

Ausserdem sind Methoden entwickelt worden, keramische Schlicker nach Zusatz von Tensiden durch Einschlagen von Luft in poröse Formkörper zu überführen. Dieses Verfahren konnte sich jedoch beim Einsatz auf dem Ziegeleisektor nicht einführen, da in den Verarbeitungsmaschinen eine unkontrollierbare Zerstörung der Luftschaumstruktur erfolgt und wie beim Zusatz von expandierten Polystyrolperlen eine elastische Rückverformung des unter hohem Druck aus der Strangpresse austretenden Formlings erfolgt.

Der vorliegenden Erfindung lag der Wunsch zugrunde, ein Hilfsmittel aufzufinden, das die durch Verarbeitungsschwierigkeiten, Plastizitätsverlust, elastische Rückverformung des Strangpresslings und Verlust an Endfestigkeit bedingten Nachteile der bisher bekannten Porosierungsverfahren für keramische Massen, insbesondere grobkeramischer Massen wie Tonziegeln, vermeidet und im Gegenteil sowohl als Verarbeitungshilfe wie auch wenig festigkeitsminderndes Porosierungsmittel bei einfacher Handhabung brauchbar ist.

Es wurde gefunden, dass diese Forderungen in überraschend günstiger Weise gemeinsam erfüllbar sind, wenn man als Porosierungshilfsmittel lagerstabile wässrige Zubereitungen von Ölen und gegebenenfalls Pulvern und speziellen Kombinationen hydrophiler Polymerer, sowie gegebenenfalls Tensiden verwendet.

Der technische Vorteil des vorgeschlagenen Verfahrens besteht nicht nur darin, dass es zu porosierten keramischen Massen mit in Hinblick auf den erzielbaren hohen Porosierungsgrad überraschend hohen Festigkeiten führt, sondern es zeigt sich auch, dass der Zusatz der erfindungsgemässen Porosierungsmittel den Homogenisierungsprozess z.B. der Tonmasse überraschend erleichtert, zu guten Plastizitäten bei gleichzeitig ausgezeichnetem Verhalten auf den Verformungsmaschinen für die Rohmassen führt und darüber hinaus auch noch den Trocknungsprozess der Formteile beschleunigt, ohne zu vermehrter Rissbildung Anlass zu geben.

In besonderem Masse ermöglicht das vorgeschlagene Verfahren grosse als Euroblock mit den Abmessungen von 30 cm Breite, 49 cm Länge und 23,8 cm Höhe wie in Bild 1 skizziert, bekannte oder grössere Blöcke mit dünneren Zwischenstegen, z.B. 4 mm Dicke, herzustellen und die Anzahl der parallel zur Wandrichtung möglichen Lochreihen auf 22 Reihen bei 30 cm dicken Blöcken zu erhöhen, was zu höherem Wärmedämmvermögen und zu geringerem Gewicht der Blöcke führt. Demgemäss ist das vorliegende Verfahren zur Porosierung von keramischen Massen durch Zusatz organischer Komponenten zur keramischen Rohmasse während des Aufbereitungsprozesses vor Trocknung und Brand dadurch gekennzeichnet, dass man als Porosierungsmittel lagerstabile wässrige Zubereitungen von Ölen und gegebenenfalls Pulvern mit Kombinationen aus wasserlöslichen bzw. in Wasser bis zum Zerfliessen der Korngrenzen quellbaren Vinylpolymeren und wasserlöslichen bzw. in Wasser bis zum Zerfliessen der Korngrenzen quellfähigen Polymeren auf Basis von Naturstoffen und gegebenenfalls Tensiden verwendet.

In besonderem Masse von Interesse sind wässrige Zubereitungen von Ölen mit Siedepunkten über 100 °C, insbesondere über 200 °C, mit Kombinationen aus wasserlöslichen, bzw. in Wasser bis zum Zerfliessen der Korngrenzen quellbaren, Acrylamid eingebaut enthaltenden Polymeren und wasserlöslichen bzw. in Wasser bis zum Zerfliessen der Korngrenzen quellbaren Polymeren auf Basis modifizierter Zellulose, sowie gegebenenfalls Tensiden, und gegebenenfalls Pulver.

Die als Porosierungsmittel dienenden wässrigen Zubereitungen enthalten erfindungsgemäss:

a) Öle in Mengen von
0,03 bis 30 Gew.-%, vorzugsweise
0,5 bis 20 Gew.-%, insbesondere
1,0 bis 15 Gew.-%, und
b) wasserlösliche bzw. quellbare Vinylpolymeren in Mengen von
0,2 bis 10 Gew.-%, vorzugsweise
0,5 bis 5 Gew.-%, insbesondere
0,75 bis 2,5 Gew.-%, und
c) wasserlösliche bzw. quellbare Polymere auf Basis von Naturstoffen in Mengen von
0,01 bis 5 Gew.-%, vorzugsweise
0,02 bis 2 Gew.-%, insbesondere
0,03 bis 1 Gew.-%, und ggf.
d) Tenside in Mengen von
0,01 bis 2 Gew.-%, vorzugsweise
0,02 bis 2 Gew.-%, insbesondere
0,03 bis 1 Gew.-%, sowie ggf.
e) Pulver in Mengen von
0,5 bis 30 Gew.-%, vorzugsweise
1,0 bis 20 Gew.-%, insbesondere
5 bis 15 Gew.-%;
sowie restlich Wasser.

Es hat sich gezeigt, dass im Rahmen des erfindungsgemässen Porosierungsverfahrens eingesetzte wässrige Zubereitungen des angegebenen Aufbaus eine gelartige Konsistenz mit hoher Homogenität und zeitlicher Dispersionsstabilität, d.h. auch Lagerstabilität besitzen, die sie befähigt, eine über das Mass des eingebauten Öl- und gegebenenfalls Pulveranteils hinausgehende Porosierung bei gleichzeitig hervorragendem Verarbeitungsverhalten der damit versetzten keramischen Rohmassen zu erzeugen.

Für die erfindungsgemässen wässrigen Zubereitungen werden vorzugsweise Öle mit Siedepunkten über 100 °C, insbesondere über 200 °C, verwendet.

Unter Ölen werden im erfindungsgemässen Sinne fliessfähige organische Substanzen mit Viskositäten bei 75 °C unter $10^4$ cp (mPa.s) verstanden, vor allem allerdings die üblicherweise als Öle verstandenen CHO- bzw. CH-Verbindungen. Es kann sich um cyclische oder lineare, aromatische, araliphatische oder aliphatische, tierische, pflanzliche oder mineralische oder synthetische Öle handeln. In besonderem Masse werden preiswerte, aus z.B. Ölfrüchten oder Erdöl, zugängliche Kohlenwasserstofföle verwendet, wie z.B. die verschiedenen Heizölfraktionen, die Schmierölfraktionen bzw. entsprechende Alt- und Abfallöle oder auch sonstige technische Öle, wie z.B. sogenanntes Paraffinöl, Weissöl oder auch Spindelöl, das sich besonders gut eignet.

Diese Öle können allein oder im Gemisch miteinander Verwendung finden, wobei die schon genannten Mengen einzusetzen sind. Eine Überschreitung der angegebenen Einsatzmenge ist zwar prinzipiell von seiten der Herstellung der wässrigen Zubereitungen möglich, ist aber in bezug auf den dann in den keramischen Vorformlingen angereicherten Gehalt an organischem Material nicht mehr empfehlenswert. Wenn die angegebenen Ölgehalte unterschritten werden, dann hat sich gezeigt, dass ein verschlechtertes Verarbeitungsverhalten der zu porosierenden Rohmassen resultiert.

Das in den wässrigen Zubereitungen enthaltene Öl sollte Tröpfchendurchmesser zwischen 0,1 und 100 Mikron besitzen, vorzugsweise zwischen 1,0 und 50 Mikron.

Als wasserlösliche bzw. in Wasser bis zum Zerfliessen der Korngrenzen quellbare Polymere werden insbesondere solche polymeren Verbindungen verstanden, deren Lösungen oder Quellungsprodukte in Wasser bei 1 Gew.-% Feststoffkonzentration und einer Schergeschwindigkeit von 1 cm/sec eine Viskosität von 1000 bis 10 000 mPa.s und höher bei 20 °C besitzen. Im Bereich höherer Viskositäten und Gele kann das Verhalten dieser wässrigen Polymerzubereitungen den Charakter fliessfähiger bis nicht fliessender Gele besitzen.

Für den Fall, dass ein derartiges Polymeres, trocken oder feucht, granuliert oder in Pulverform vorliegt, erfolgt in überschüssigem Wasser eine so starke Quellung, dass die ursprünglichen Korngrenzen nicht mehr wahrnehmbar sind, wobei gegebenenfalls der Quellprozess kontinuierlich in einen Löseprozess übergehen kann; die resultierenden «Lösungen» zeigen im allgemeinen ein nicht-Newton'sches Fliessverhalten. Falls gelartige Konsistenz vorliegt, ist es unerheblich, ob es sich um ein covalentes Gel oder ein Nebenvalenzgel handelt.

Erfindungsgemäss werden als Komponente b) Vinylpolymere mit solchen Lösungs- bzw. Quellungseigenschaften in wässrigem Medium in den bereits genannten Mengen eingesetzt.

Derartige Vinylpolymere sind z. B. Verseifungsprodukte von Polyvinylestern, wie Polyvinylalkohol, Polymere und Copolymere von (Meth)Acrylsäure oder Maleinanhydrid, gegebenenfalls in Form ihrer Salze, Polymere des Vinylpyrrolidons, von Vinylamiden, Vinylurethan, Vinylcarbonat, Vinylmethylether oder Acrylestern mit wasserlöslichen neutralen, sauren oder basischen Gruppen; von besonderer Bedeutung sind saure, neutrale oder basische Polymere, die substituierte oder bevorzugt unsubstituierte Acrylamidgruppen eingebaut enthalten, wie Diacetonacrylamidpolymere, Verseifungsprodukte des Polyacrylnitrils oder Polymerisationsprodukte des Methacryl- bzw. insbesondere des Acrylamids, d. h. Polymerisate, die eingebaute Acrylamideinheiten enthalten und das oben beschriebene Verhalten in wässriger Zubereitung zeigen. Im allgemeinen enthalten solche Polymerisate mehr als 30 Gew.-%, vorzugsweise mehr als 50 Gew.-%, an eingebauten Acrylamideinheiten und haben Molgewichte über 50 000, wenn sie verfahrensgemäss mit besonderem Erfolg einsetzbar sind. Sie werden allein oder als Gemisch eingesetzt.

Als Komponente c) werden erfindungsgemäss Polymere mit dem beschriebenen Verhalten in wässriger Zubereitung auf Basis von Naturstoffen in den bereits genannten Mengen verwendet.

Unter solchen werden insbesondere verstanden: Polymere auf Basis von Polynukleotiden, Polypeptiden, Polysacchariden wie Kasein, Gelatine, Alginat, Carrageenat, Xantham, Guargum, bakterielles Polysaccharid, Pflanzengummis, Stärken, Chitin, insbesondere aber Zellulose, wie etwa Carboxymethylzellulose, Methylzellulose, oder Hydroxyethylzellulose.

Diese Polymeren können allein oder im Gemisch miteinander eingesetzt werden.

Als Komponente d) der erfindungsgemäss zu verwendenden wässrigen Zubereitungen kommen gegebenenfalls Tenside in Betracht, in den vorbeschriebenen Mengen.

Bei den Tensiden kann es sich um ionische oder nichtionische Netzmittel oder Emulgatoren handeln, die Grenzen sind fliessend. Unter der Vielzahl der prinzipiell für diesen Einsatzbereich geeigneten, an sich bekannten, Stoffgruppen wie z. B. Sulfonaten von Aromaten, Aliphaten oder Araliphaten, Sulfonsäureestern, Tauraten, quaternierte Ammoniumverbindungen, Ethylenoxylmischpolymerisaten, z. B. mit Propylenoxid, Salzen von Fettsäuren bzw. deren komplexen Estern, Fettalkoholen, Zuckerestern, Ethylenoxidanlagerungsprodukten an hydrophobe Alkohole, Amine oder Fettsäuren haben sich in besonderem Masse Anlagerungsprodukte von Ethylenoxid an Isononylphenol bewährt, wie z. B. das Anlagerungsprodukt von 8 bis 15 Mol Ethylenoxid an Isononylphenol, weil derartige Tenside relativ wenig empfindlich gegen ionische Störstoffe sind, wie sie gegebenenfalls in keramischen Massen zu erwarten sind.

Als Komponente e) der erfindungsgemäss zu verwendenden wässrigen Zubereitungen kommen gegebenenfalls Pulver in Betracht, in den vorher beschriebenen Mengen.

Bei den Pulvern handelt es sich um Stäube und Mehle, vorzugsweise organischer, gegebenenfalls auch anorganischer Basis, die zum überwiegenden Anteil eine Teilchengrösse von höchstens 90 µm aufweisen. Vorzugsweise sollen mindestens 90 Gew.-% des Pulvers eine Teilchengrösse von unter 90 µm aufweisen.

Unter der Vielzahl der prinzipiell für diesen Einsatzbereich geeigneten Substanzen, wie z. B. Mehlen aus Kernen und/oder Schalen von z. B. Oliven, Steinobst, Nüssen, Hülsenfrüchten, Stroh, Baumrinden und Holz, hat sich in besonderem Masse Kohlenstaub, der sowohl bei der Steinkohlenaufbereitung als auch bei der Braunkohlenverarbeitung anfällt oder aus diesen Kohlearten oder Koks durch Mahlen hergestellt sein kann, bewährt.

Als Pulver anorganischer Basis kommen z. B. Kalziumcarbonat, Bimssteinmehl oder silikatische Produkte, wie z. B. Kurzglasfaser, Mikroperlen, Mikrohohlperlen, Kieselsäure oder Glasmehl in Frage.

Die Herstellung der erfindungsgemäss als Porosierungsmittel zu verwendenden wässrigen Zubereitungen von Ölen kann diskontinuierlich oder kontinuierlich erfolgen. Zweckmässigerweise wird zuerst eine Zubereitung der polymeren Komponenten b) und c), gegebenenfalls auch d), gegebenenfalls auch e), in Wasser hergestellt und das Öl hinzugerührt. Es ist aber auch möglich, alle Komponenten gemeinsam oder auch in Form ihrer Lösungen in einem Mischaggregat zusammenzuführen. Es ist auch in Betracht zu ziehen, dass man zunächst eine Art rieselfähiges, pulvriges oder flüssiges Konzentrat herstellt und dieses durch Zusatz der jeweils noch benötigten weiteren Menge an Komponenten, z.B. Wasser, vor der Verwendung auf die gewünschte Einsatzkonzentration einstellt.

Die wässrigen Ölzubereitungen werden den keramischen Rohmassen zur Porosierung in Mengen von 5 bis 50, bevorzugt 8 bis 40, insbesondere 10 bis 35 Gew.-%, bezogen auf keramische Rohmischung, zugemischt. Der Zusatz des Porosierungsmittels kann prinzipiell auf jeder Stufe des Aufbereitungsverfahrens für die Rohmassen erfolgen, zweckmässigerweise natürlich während des Homogenisierungsprozesses, ob dieser nun durch Rundbeschicker, Kneter oder Schneckenmaschinen erfolgt.

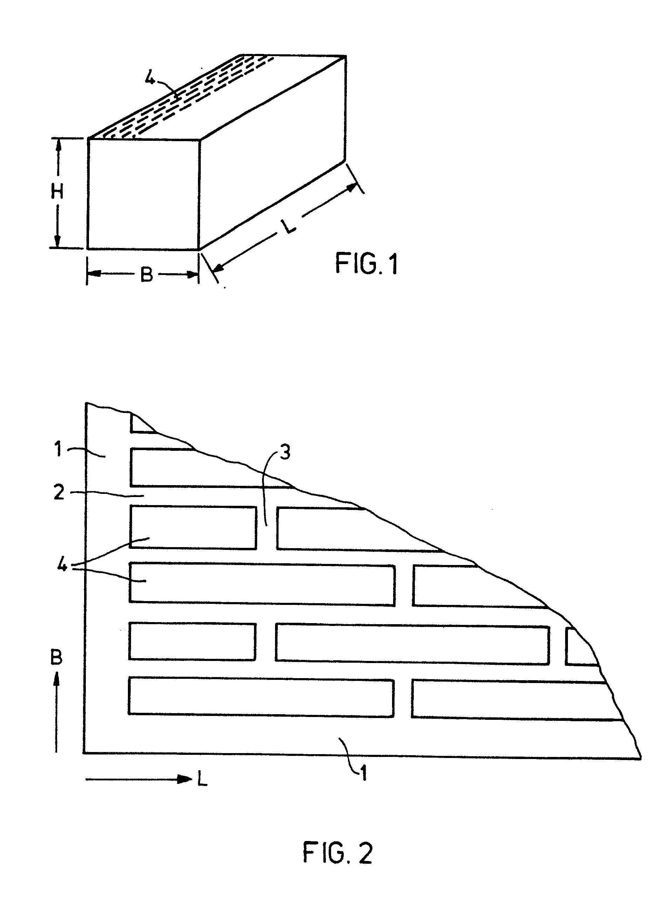

Die Figuren 1 und 2 erläutern den als Euroblock bekannten Ziegel.

Fig. 1 zeigt eine perspektivische Darstellung. H, B und L bezeichnen Höhe, Breite und Länge mit den bevorzugten, eingangs beschriebenen, Abmessungen. Die Lochreihen 4 werden etwa massstabsgetreu in Fig. 2 als Ausschnitt aus der Fläche B × L vergrössert dargestellt. Der Ziegel besteht aus einer dickeren Aussenwand 1 von 9 mm Dikke. Die Lochreihen 4 werden durch Stege 2 und 3 gebildet, die bei erfindungsgemässer Verwendung der wässrigen Zubereitungen lediglich eine Dicke von ca. 4 mm benötigen, so dass die Anzahl der Lochreihen auf 22 erhöht werden kann. Die Löcher selbst weisen eine Breite von 9 mm und eine Länge von 64 mm auf.

Im Folgenden werden Herstellung und Wirkung der Porosierungsmittel beispielhaft erläutert: Die angegebenen Teile und Prozente beziehen sich auf das Gewicht, sofern nicht anders erläutert.

Beispiel 1

In 85,35 Teile entmineralisiertes Wasser werden nacheinander

1,8 Teile handelsübliches Polyacrylamid als «Wasser-in-Öl-Emulsion» (Retaminol PAE, Bayer AG)
Wirkstoffgehalt: 25%

Molgew. Polyacrylamid: > 50 000
Viskosität: ca. 1000–1500 mPa.s
(gemessen bei 20 °C nach Brookfield)

0,95 Teile Hydroxyethylzellulose
Substitutionsgrad 2,0–2,2
Viskosität: ca. 15 000 mPa.s
(gemessen als 2%ige wässrige Lösung bei 20 °C nach Haake)

0,2 Teile Emulgator (Anlagerungsprodukt von 10 Mol Ethylenoxid an 1 Mol Nonylphenol) und

11,7 Teile Spindelöl (ISO VG 22 DIN 51519) unter mechanischem Rühren (1000 U/min) innerhalb von 2 Minuten gegeben. Die Mischung wird weitere 3 Minuten mit 1500–2000 U/min gerührt. Innerhalb von 15 Minuten nach Mischungsende bildet sich ein Gel.

Beispiel 2

In 88 Teile entmineralisiertes Wasser werden nacheinander

1 Teil handelsübliches hochmolekulares Polyacrylamid
(Retaminol PA, Bayer AG)
Molgewicht: > 50 000,
Viskosität: ca. 370 mPa.s
(gemessen als 0,5%ige Lösung in Leitungswasser mittlerer Härte bei 20 °C nach Brookfield),

1 Teil Hydroxyethylzellulose, Substitutionsgrad: 2,0–2,2,
Viskosität: ca. 15 000 mPa.s
(gemessen als 2%ige wässrige Lösung bei 20 °C nach Haake),

0,2 Teile Emulgator (Anlagerungsprodukt von 10 Mol Ethylenoxid an 1 Mol Nonylphenol) und 10,0 Teile Spindelöl (ISO VG 22 DIN 51519) unter mechanischem Rühren (1000 U/min) innerhalb von 5 Minuten gegeben. Die Mischung wird weitere 2 Minuten gerührt. Innerhalb von 15 Minuten nach Ende des Vermischungsprozesses bildet sich ein Gel.

Beispiel 3

Die in Beispiel 2 verwendeten Mischungskomponenten werden in verschiedenen Verhältnissen nach der in Beispiel 2 beschriebenen Verfahrensweise gemischt. Man erhält jeweils ein Gel.

| Versuch | 1 | 2 | 3 | 4 | 5 | 6 | 7 | 8 | 9 |
|---|---|---|---|---|---|---|---|---|---|
| Polyacrylamid | 1,0 | 1,0 | 1 | 0,75 | 0,75 | 0,5 | 0,5 | 0,5 | 0,5 |
| Hydroxyethylcellulose | 0,75 | 0,5 | 0,30 | 1,0 | 0,5 | 0,3 | 1,0 | 0,75 | 0,5 |
| Spindelöl | 10,0 | 10,0 | 10,0 | 10,0 | 10,0 | 10,0 | 10,0 | 10,0 | 10,0 |
| Emulgator | 0,2 | 0,2 | 0,2 | 0,2 | 0,2 | 0,2 | 0,2 | 0,2 | 0,2 |
| $H_2O$ | 88,05 | 88,30 | 88,50 | 88,05 | 88,50 | 88,75 | 88,30 | 88,55 | 88,8 |

**Beispiel 4**

In 88 Teile entmineralisiertes Wasser werden nacheinander

1 Teil handelsübliches hochmolekulares Polyacrylamid
   (Retaminol PA, Bayer AG)
   Molgew.: > 50 000
   Viskosität: ca. 370 mPa.s
   (gemessen als 0,5%ige Lösung in Leitungswasser mittlerer Härte bei 20 °C nach Brookfield),
1 Teil Hydroxyethylzellulose, Substitutionsgrad: 2,0–2,2,
   Viskosität: ca. 15 000 mPa.s
   (gemessen als 2%ige wässrige Lösung bei 20 °C nach Haake),

0,2 Teile Emulgator (Anlagerungsprodukt von 10 Mol Ethylenoxid an 1 Mol Nonylphenol),
2 Teile Spindelöl (ISO VG 22 DIN 51519) und
10 Teile Kohlenstaubgemisch (80% < 90 µm, Basis: Braunkohle/Steinkohle 1 : 1)

unter mechanischem Rühren (800 U/min) innerhalb von 3 Minuten gegeben. Die Mischung wird weitere 4 Minuten mit 1500 U/min gerührt. Innerhalb von 15 Minuten nach Ende des Vermischungsprozesses bildet sich ein Gel.

**Beispiel 5**

Die in Beispiel 4 verwendeten Mischungskomponenten werden in verschiedenen Verhältnissen nach der in Beispiel 3 beschriebenen Verfahrensweise gemischt. Man erhält jeweils ein Gel.

| Versuch | 1 | 2 | 3 | 4 | 5 | 6 | 7 | 8 |
|---|---|---|---|---|---|---|---|---|
| Polyacrylamid | 1 | 1 | 0,75 | 0,75 | 0,5 | 0,5 | 0,5 | 0,5 |
| Hydroxyethylzellulose | 0,75 | 0,5 | 0,5 | 0,3 | 1,0 | 0,75 | 0,5 | 0,3 |
| Spindelöl | 2 | 2 | 2 | 2 | 2 | 2 | 2 | 2 |
| Kohlegemisch | 10 | 10 | 10 | 10 | 10 | 10 | 10 | 10 |
| Emulgator | 0,2 | 0,2 | 0,2 | 0,2 | 0,2 | 0,2 | 0,2 | 0,2 |
| $H_2O$ | 86,05 | 86,3 | 86,55 | 86,75 | 86,3 | 86,55 | 86,8 | 87,0 |

**Beispiel 6**

a) Herstellung des Granulats

Zu 50 Teilen Steinkohlestaub (80% < 90 µm) werden nacheinander

50 Teile Braunkohlenstaub (80% < 90 µm),
3 Teile Hydroxyethylzellulose
   Substitutionsgrad: 2,0–2,2,
   Viskosität: ca. 15 000 mPa.s
   (gemessen als 2%ige wässrige Lösung bei 20 °C nach Haake),
7,5 Teile hochmolekulares Polyacrylamid (Retaminol PA, Bayer AG)
   Molgew.: > 50 000,
   Viskosität: ca. 370 mPa.s
   (gemessen an 0,5% Lösung in Leitungswasser mittlerer Härte bei 20 °C nach Brookfield),
20 Teile Spindelöl (ISO VG 22 DIN 51519) und
2 Teile Emulgator (Anlagerungsprodukt von 10 Mol Ethylenoxid an 1 Mol Nonylphenol)

gegeben und in einem Labormischer (Fabrikat:

Lödige, 5 kg Inhalt) 15 Minuten mechanisch gemischt. Es entsteht ein rieselfähiges Granulat.

b) Herstellung des Gels

In 87 Teile Wasser werden unter mechanischem Rühren (1000 U/min) 13 Teile des gemäss a) erhaltenen Granulats innerhalb von 30 Sekunden gegeben und mit 1500 bis 2000 U/min weitere 30 Sekunden gerührt. Innerhalb von 15 Minuten nach Ende des Vermischungsprozesses bildet sich ein Gel.

**Beispiel 7**

a) Herstellung des Granulats

Die im Beispiel 6a) verwendeten Mischungskomponenten werden in verschiedenen Verhältnissen nach der in Beispiel 6a) beschriebenen Verfahrensweise gemischt.

| Versuch | 1 | 2 | 3 | 4 | 5 | 6 | 7 | 8 | 9 |
|---|---|---|---|---|---|---|---|---|---|
| Polyacrylamid | 10 | 7,5 | 7,5 | 7,5 | 7,5 | 5 | 10 | 7,5 | 10 |
| Hydroxyethylzellulose | 5 | 5 | 3 | 5 | 5 | 15 | 10 | 4 | 3 |
| Braunkohle | 50 | 50 | 50 | 100 | – | 50 | 50 | 50 | 50 |
| Steinkohle | 50 | 50 | 50 | – | 100 | 50 | 50 | 50 | 50 |
| Spindelöl | 20 | 20 | 20 | 20 | 20 | 10 | 10 | 10 | 10 |
| Emulgator | 2 | 2 | 2 | 2 | 2 | 1 | 1 | 1 | 1 |

b) Herstellung des Gels

Das nach a), Versuch 3, erhaltene rieselfähige Granulat wird in unterschiedlichen Mengen gemäss der Verfahrensweise Beispiel 6b) gemischt. Man erhält jeweils ein Gel.

| Versuch | 10 | 11 | 12 | 13 | 14 | 15 |
|---|---|---|---|---|---|---|
| Granulat | 9 | 11 | 15 | 17 | 19 | 21 |
| Wasser | 91 | 89 | 85 | 83 | 81 | 79 |

**Beispiel 8**

In 85,5 Teile Wasser werden nacheinander

1,8 Teile hochmolekulares Polyacrylamid als «Wasser-in-Öl-Emulsion» (Retaminol PAE, Bayer AG)

Wirkstoffgehalt: 25%

Molgew. Polyacrylamid: > 50 000

Viskosität: ca. 1000–1500 mPa.s

(bei 20 °C nach Brookfield),

0,95 Teile Hydroxyethylzellulose

Substitutionsgrad: 2,0–2,2

Viskosität: ca. 15 000 mPa.s

(gemessen als 2%ige wässrige Lösung bei 20 °C nach Haake),

2,35 Teile Spindelöl (ISO VG 22 DIN 51519) und 9,50 Teile Braunkohlenstaub (80% < 90 μm)

unter mechanischem Rühren (800 U/min) innerhalb von 3 Minuten gegeben. Die Mischung wird bei 1000–2000 U/min weitere 3 Minuten gerührt. Innerhalb von 15 Minuten nach Ende des Vermischungsprozesses bildet sich ein Gel.

**Beispiel 9**

In 83,75 Teile Wasser werden nacheinander

2,10 Teile handelsübliches hochmolekulares Polyacrylamid als «Wasser-in-Öl-Emulsion» (Retaminol PKE, Bayer AG)

Wirkstoffgehalt: 28%

Molgew. Polyacrylamid: > 5000

Viskosität: ca. 600 mPa.s

(gemessen bei 20 °C, Rheomat A/I)

1,25 Teile Hydroxyethylzellulose,

Substitutionsgrad: 2,0–2,2

Viskosität: ca. 15 000 mPa.s

(gemessen als 2%ige wässrige Lösung bei 20 °C nach Haake),

3,2 Teile Spindelöl (ISO VG 22 DIN 51519) und

9,7 Teile Kohlenstaubgemisch

(80% < 90 μm, Basis: Stein-/Braunkohle, 1:1) unter mechanischem Rühren (800 U/min) innerhalb von 3 Minuten gegeben. Die Mischung wird bei 1000–2000 U/min weitere 3 Minuten gerührt. Innerhalb von 15 Minuten nach Ende des Vermischungsprozesses bildet sich ein Gel.

**Beispiel 10**

Die in Beispiel 8 und/oder 9 verwendeten Mischungskomponenten werden in verschiedenen Verhältnissen nach der in Beispiel 8 und 9 beschriebenen Verfahrensweise gemischt. Man erhält ein Gel.

| Versuch | 1 | 2 | 3 | 4 | 5 | 6 | 7 | 8 |
|---|---|---|---|---|---|---|---|---|
| Polyacrylamid 25%ig | 2,0 | 2,0 | 3,8 | – | – | – | 3,0 | – |
| Polyacrylamid 28%ig | – | – | – | 2,05 | 2,7 | 3,6 | – | 2,7 |
| Hydroxyethylzellulose | 0,7 | 0,5 | 0,3 | 1,25 | 0,5 | 0,3 | 0,5 | 0,3 |
| Spindelöl | 1,5 | 10 | 0,5 | 2,0 | 1,4 | 0,8 | – | – |
| Braunkohle | 5,0 | 5,0 | 6,5 | 5,5 | 6,0 | 6,5 | 5,0 | 5,0 |
| Steinkohle | 5,0 | 5,0 | 6,5 | 5,5 | 6,0 | 6,5 | 5,0 | 5,0 |
| Wasser | 86,80 | 86,5 | 82,40 | 83,7 | 83,4 | 82,3 | 86,5 | 87 |

**Beispiel 11**

In 84 Teile entmineralisiertes Wasser werden nacheinander

2,7 Teile handelsübliches hochmolekulares Polyacrylamid als «Wasser-in-Öl-Emulsion» (Retaminol PKE, Bayer AG)

Wirkstoffgehalt: 28%

Molgew. Polyacrylamid: > 50 000

Viskosität: ca. 600 mPa.s

(gemessen bei 20 °C, Rheomat A/I)

0,4 Teile Carboxymethylzellulose

Substitutionsgrad: 0,6–0,8

Viskosität: ca. 1500 mPa.s

(gemessen als 2%ige wässrige Lösung bei 20 °C nach Haake)

3,2 Teile Spindelöl (ISO VG 22 DIN 51519) und

9,7 Teile Kohlenstaubgemisch (80% < 90 μm, Basis: Stein-/Braunkohle, 1:1)

unter mechanischem Rühren (800 U/min) innerhalb von 3 Minuten gegeben. Die Mischung wird weitere 2 Minuten gerührt. Innerhalb von 15 Minuten bildet sich ein Gel.

**Beispiel 12**

In 71,3 Teile Wasser werden nacheinander

0,1 Teile Emulgator (Anlagerungsprodukt von 10 Mol Ethylenoxid an 1 Mol Nonylphenol),

3,6 Teile Polyacrylamid und Hydroxyethylzellulose als «Wasser-in-Öl-Emulsion»,

Wirkstoffgehalt:

Polyacrylamid: ca. 30%

Molgew.: > 50 000

Hydroxyethylzellulose: ca. 1,7%

Viskosität: ca. 600 mPa.s

(gemessen als 2%ige wässrige Lösung bei 20 °C nach Haake) und

25,0 Teile Spindelöl (ISO VG 22 DIN 51519)

gegeben und mechanisch 2 Minuten mit 2000–2500 U/min gerührt. Innerhalb von 10 Minuten nach Ende des Vermischungsprozesses bildet sich ein Gel.

**Beispiel 13**

a) Herstellen und Homogenisieren der keramischen Masse

Zu 100 Vol.-Teilen einer Löss/Tonmischung (40 Gew.-Teile Lösslehm, 88% < 0,2 mm, 45% < 0,02 mm und 60 Gew.-Teile Opalinuston 98% < 0,20 mm, 62% < 0,02), die auf die trockene Löss/Tonmischung bezogen ca. 17% Wasser enthält, werden 30 Vol.-Teile der nach Beispiel 1 erhaltenen gelartigen Mischung gegeben und in einem Labor-Siebrundbeschicker (Fabrikat: Rieterwerke Dipl.Ing. Walter Händle, Konstanz) ge-

mischt und homogenisiert und auf eine Steife von 30 mm Pefferkorn-Resthöhe eingestellt.

b) Herstellen der Ziegel

Die nach a) erhaltene Tonmasse (Dichte 1,9 g/cm³) wurde mit einer Labor-Ziegelpresse (Typ: Laborvakuumaggregat KLVA 80, Fabrikat: Rieterwerke Dipl.Ing. Walter Händle GmbH, Konstanz) zu Lochsteinen mit 15% Lochanteil, bezogen auf den Querschnitt, verpresst und bis zum Erreichen ihrer Ausgleichsfeuchte 4 Tage bei Raumtemperatur offen gelagert. Anschliessend wurden die Formlinge im Trockenschrank 8 Stunden erwärmt und dann im Elektroofen mit einer Aufheizgeschwindigkeit von 80 °C/h auf 970 °C erhitzt. Diese Temperatur wurde 4 Stunden gehalten. Die Abkühlung erfolgte gemäss dem natürlichen Erkalten des Ofens.

An den 3 Tage bei Raumtemperatur gelagerten Ziegeln wurden folgende Werte ermittelt:

Gesamtschwindung: ca. 7,8% (linear)
Scherbendichte:      1,69 g/cm³
Steinfestigkeit:       35 N/mm² (Mittelwert)
(gemessen an 10 Prüfkörpern h = 55 mm, l = 57 mm, b = 27 mm)

Beispiel 14

Gemäss der Verfahrensweise Beispiel 13 wurde das gleiche Löss/Ton-Gemisch mit einem nach Beispiel 12 erhaltenen gelartigen Gemisch zu Ziegeln verarbeitet.

Die Prüfwerte waren:

Gesamtschwindung: ca. 7,1% (linear)
Scherbendichte:      1,64 g/cm²
Steinfestigkeit:       14 N/mm² (Mittelwert)

Beispiel 15 (Vergleich)

Gemäss der Verfahrensweise Beispiel 13 wurde das gleiche Löss/Ton-Gemisch ohne Zusatz der erfindungsgemässen gelartigen Mischung zu Ziegeln verarbeitet.

Die Prüfwerte waren:

Gesamtschwindung: ca 8,2% (linear)
Scherbendichte:      1,84 g/cm³
Steinfestigkeit:       64 N/mm² (Mittelwert)

Beispiel 16

Gemäss der Verfahrensweise Beispiel 13 wurden zu 100 Vol.-Teilen des gleichen Löss/Ton-Gemisches 64 Vol.-Teile der nach Beispiel 6b) erhaltenen gelartigen Mischung gegeben und zu Ziegeln verarbeitet.

Die Prüfwerte waren:

Gesamtschwindung: ca. 7,9% (linear)
Scherbendichte:      1,56 g/cm³
Steinfestigkeit:       20,0 N/mm² (Mittelwert)

Beispiel 17

Gemäss der Verfahrensweise Beispiel 13 wurden zu 100 Vol.-Teilen des gleichen Löss/Ton-Gemisches 64 Vol.-Teile der nach Beispiel 10, Versuch 4, erhaltenen gelartigen Mischung gegeben und zu Ziegeln verarbeitet.

Die Prüfwerte waren:
Gesamtschwindung: ca. 7,6% (linear)
Scherbendichte:      1,56 g/cm³
Steinfestigkeit:       21,6 N/mm² (Mittelwert)

**Patentansprüche**

1. Wässrige Zubereitung, bestehend aus
a) Ölen in Mengen von 0,03 bis 30 Gew.-% und
b) wasserlöslichen bzw. quellbaren Vinylpolymeren in Mengen von 0,2 bis 10 Gew.-% und
c) wasserlöslichen bzw. quellbaren Polymeren auf Basis von Naturstoffen in Mengen von 0,01 bis 5 Gew.-% und gegebenenfalls
d) Tensiden in Mengen von 0,01 bis 2 Gew.-%, sowie
e) anorganischen oder organischen Pulvern in Mengen von 0,5 bis 30 Gew.-%, sowie restlich Wasser.

2. Wässrige Zubereitung nach Anspruch 1, enthaltend
a) Öle in Mengen von 0,5 bis 20 Gew.-%, vorzugsweise 1,0 bis 15 Gew.-% und
b) Vinylpolymere in Mengen von 0,5 bis 5 Gew.-%, vorzugsweise 0,75 bis 2,5 Gew.-% und
c) Polymere auf Basis von Naturstoffen in Mengen von 0,02 bis 2 Gew.-%, vorzugsweise 0,03 bis 1 Gew.-% und gegebenenfalls
d) Tenside in Mengen von 0,02 bis 2 Gew.-%, vorzugsweise 0,03 bis 1 Gew.-%, sowie gegebenenfalls
e) Pulver in Mengen von 1,0 bis 20 Gew.-%, vorzugsweise 5 bis 15 Gew.-%.

3. Wässrige Zubereitung nach Ansprüchen 1 oder 2, dadurch gekennzeichnet, dass das Öl eine Siedetemperatur von über 100 °C, vorzugsweise über 200 °C, aufweist.

4. Wässrige Zubereitung nach einem der Ansprüche 1 bis 3, dadurch gekennzeichnet, dass das Öl bei 75 °C eine Viskosität von unter 10⁴ cp aufweist.

5. Wässrige Zubereitung nach einem der Ansprüche 1 bis 4, dadurch gekennzeichnet, dass als Vinylpolymeres Acrylamidpolymerisate mit einem Molekulargewicht von oberhalb 50 000 eingesetzt werden.

6. Wässrige Zubereitung nach einem der Ansprüche 1 bis 5, dadurch gekennzeichnet, dass als Polymeres auf Basis von Naturstoffen Zellulose und/oder Zellulosederivate eingesetzt werden.

7. Verwendung der wässrigen Zubereitung nach einem der Ansprüche 1 bis 6 bei der Herstellung poröser Ziegel.

**Claims**

1. Aqueous preparation consisting of
a) oils in quantities of 0.03 to 30% by weight and
b) water-soluble or swellable vinyl polymers in quantities of 0.2 to 10% by weight and
c) water-soluble or swellable polymers based on natural substances in quantities of 0.01 to 5% by weight and optionally
d) surfactants in quantities of 0.01 to 2% by weight and

e) inorganic or organic powders in quantities of 0.5 to 30% by weight, and water as the remaining quantity.

2. Aqueous preparation according to Claim 1, containing

a) oils in quantities of 0.5 to 20% by weight, preferably 1.0 to 15% by weight and

b) vinyl polymers in quantities of 0.5 to 5% by weight, preferably 0.75 to 2.5% by weight and

c) polymers based on natural substances in quantities of 0.02 to 2% by weight, preferably 0.03 to 1% by weight and optionally

d) surfactants in quantities of 0.02 to 2% by weight, preferably 0.03 to 1% by weight, and optionally

e) powders in quantities of 1.0 to 20% by weight, preferably 5 to 15% by weight.

3. Aqueous preparation according to Claims 1 or 2, characterised in that the oil has a boiling temperature above 100 °C, preferably above 200 °C.

4. Aqueous preparation according to one of Claims 1 to 3, characterised in that the oil has a viscosity of below $10^4$ cp at 75 °C.

5. Aqueous preparation according to one of Claims 1 to 4, characterised in that acrylamide polymers having a molecular weight of higher than 50,000 are used as the vinyl polymer.

6. Aqueous preparation according to one of Claims 1 to 5, characterised in that cellulose and/or cellulose derivatives are used as the polymer based on natural substances.

7. Use of the aqueous preparation according to one of Claims 1 to 6 in the production of porous bricks.

**Revendications**

1. Préparation aqueuse, constituée

a) d'huiles en quantités de 0,03 à 30% en poids et

b) de polymères vinyliques hydrosolubles ou gonflant à l'eau, en quantités de 0,2 à 10% en poids et

c) de polymères hydrosolubles ou gonflant à l'eau à base de substances naturelles en quantités de 0,01 à 5% en poids et, le cas échéant

d) d'agents tensio-actifs en quantités de 0,01 à 2% en poids ainsi que

e) de poudres inorganiques ou organiques en quantités de 0,5 à 30% en poids, ainsi que d'eau constituant le reste.

2. Préparation aqueuse suivant la revendication 1, contenant

a) des huiles en quantités de 0,5 à 20% en poids, de préférence 1,0 à 15% en poids et

b) des polymères vinyliques en quantités de 0,5 à 5% en poids, de préférence de 0,75 à 2,5% en poids et

c) des polymères à base de substances naturelles en quantités de 0,02 à 2% en poids, de préférence de 0,03 à 1% en poids et, le cas échéant,

d) des agents tensio-actifs en quantités de 0,02 à 2% en poids, de préférence de 0,03 à 1% en poids ainsi que, le cas échéant,

e) des poudres en quantités de 1,0 à 20% en poids, de préférence de 5 à 15% en poids.

3. Préparation aqueuse suivant les revendications 1 ou 2, caractérisée en ce que l'huile présente une température d'ébullition supérieure à 100 °C, de préférence supérieure à 200 °C.

4. Préparation aqueuse suivant l'une des revendications 1 à 3, caractérisée en ce que l'huile présente une viscosité à 75 °C inférieure à $10^4$ cp.

5. Préparation aqueuse suivant l'une des revendicationds 1 à 4, caractérisée en ce qu'on utilise comme polymères vinyliques des polymères d'acrylamide ayant un poids moléculaire supérieur à 50 000.

6. Préparation aqueuse suivant l'une des revendications 1 à 5, caractérisée en ce qu'on utilise comme polymères à base de substances naturelles la cellulose et/ou des dérivés de la cellulose.

7. Utilisation de la préparation aqueuse suivant l'une des revendications 1 à 6 dans la préparation de briques poreuses.

FIG. 1

FIG. 2